# EUROPEAN PATENT SPECIFICATION

(11) **EP 3 290 394 B1**
(45) Date of publication and mention of the grant of the patent: **09.06.2021**
(21) Application number: 16786167.3
(22) Date of filing: 03.02.2016
(51) Int. Cl.: C02F 1/50, B63B 13/00, B63J 4/00

(54) **BALLAST WATER TREATMENT DEVICE AND BALLAST WATER TREATMENT METHOD**
BALLASTWASSERBEARBEITUNGSVORRICHTUNG UND BALLASTWASSERBEARBEITUNGSVERFAHREN
DISPOSITIF DE TRAITEMENT D'EAU DE BALLASTAGE ET PROCÉDÉ DE TRAITEMENT D'EAU DE BALLASTAGE

(30) Priority: 30.04.2015 JP 2015092851
(43) Date of publication of application: 07.03.2018
(73) Proprietor: Kuraray Co., Ltd., Kurashiki-shi, Okayama 710-0801 (JP)
(72) Inventor: TAJIMA, Yasuhiro, Osaka-shi Osaka 530-8611 (JP)
(74) Representative: Vossius & Partner Patentanwälte Rechtsanwälte mbB
(86) International application number: PCT/JP2016/053289
(87) International publication number: WO 2016/174890

(56) References cited:
- JP-A- 2009 112 978
- JP-A- 2011 173 058
- JP-A- 2013 166 544
- JP-A- 2015 016 761
- US-A1- 2008 164 217

## Description

### Technical Field

The present invention relates to a ballast water treatment device and a ballast water treatment method.

### Background Art

To stabilize a vessel such as a cargo vessel with no cargo loaded, known measures have been conventionally taken of filling a ballast tank arranged in the vessel with seawater as ballast water. Here, seawater used as ballast water contains a lot of microbes, bacteria, and the like. Adverse effects of such microbes and bacteria on a marine ecosystem are international concerns. Under these circumstances, International Maritime Organization (IMO) adopted International Convention for the Control and Management of Ships' Ballast Water and Sediments in 2004. The convention provides for an upper limit of the number of organisms included in ballast water to be discharged from a vessel. For satisfying the provision, it is necessary to sterilize ballast water.

Examples of the seawater sterilization method include a method for infusing chemicals, a method for radiating an ultraviolet ray, and the like. In a method for conducting sterilization as disclosed in Patent Literature 1, with a main pipe leading to a ballast tank and a pipe from a chemical agent tank connected with each other, a sterilization agent is introduced into seawater through the pipe from the chemical agent tank.

### Citation List

### Patent Literature

Patent Literature 1: WO 2010/093025
Patent Literature 2: JP 2011 173058 A relates to a ballast water treatment apparatus.
Patent Literature 3: US 2008/164217 A1 relates to a method of liquid detoxification and an apparatus for converting untreated liquid to a clean harmless treated liquid.
Patent Literature 4: JP 2013 166544 A relates to a ballast water treatment system.

### Summary of Invention

In the above ballast water treatment method, at the time of filling water, a sterilizing component such as chlorine is poured into seawater.

However, while ballast water is kept in a ballast tank, a concentration of a sterilizing component in the ballast water is reduced, so that microbes or bacteria start to regrow. This tendency of growth is conspicuous, in particular, when a water temperature is high or when a lot of organic substances or the like are dissolved.

An object of the present invention is to provide a ballast water treatment device and a ballast water treatment method which enable an increase in a concentration of a sterilizing component of ballast water in a ballast tank.

A ballast water treatment device according to one aspect of the present invention includes a ballast water treatment device according to claim 1.

Additionally, a ballast water treatment method according to one aspect of the present invention includes a ballast water treatment method according to claim 7.

### Brief Description of Drawings

FIG. 1 is a schematic diagram showing a configuration of a ballast water treatment device according to a first embodiment of the present invention.
FIG. 2 is a block diagram showing the configuration of the above ballast water treatment device.
FIG. 3 is a flowchart for explaining a method for adjusting a concentration of a sterilizing component in the above ballast water treatment device.
FIG. 4 is a schematic diagram showing a configuration of a ballast water treatment device according to a second embodiment of the present invention.
FIG. 5 is a schematic diagram showing a configuration of a ballast water treatment device according to a third embodiment of the present invention.
FIG. 6 is a schematic diagram showing a configuration of a ballast water treatment device according to a fourth embodiment of the present invention.
FIG. 7 is a schematic diagram showing a configuration of a chemical container in the above ballast water treatment device.
FIG. 8 is a schematic diagram showing a configuration of a ballast water treatment device according to a first example.

### Description of Embodiments

In the following, embodiments of the present invention will be described in detail with reference to the drawings.

### First Embodiment

### <Configuration of Ballast Water Treatment Device>

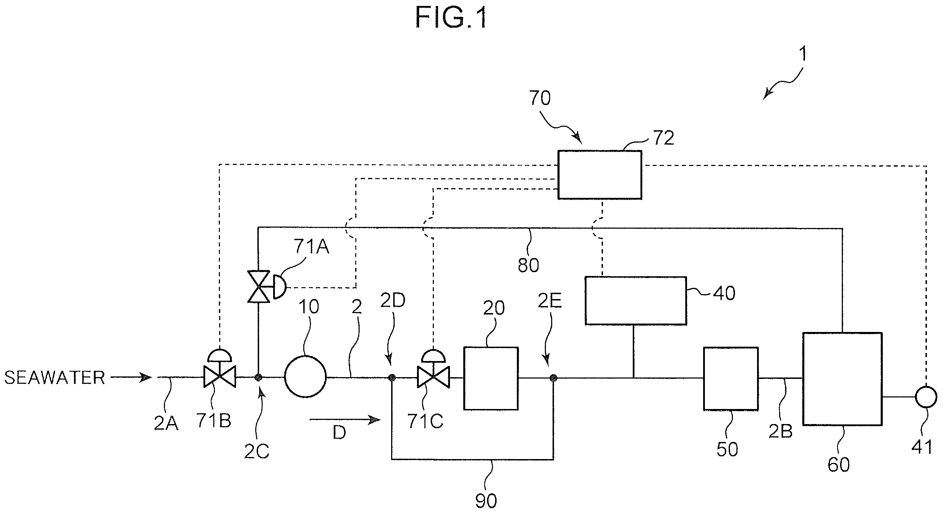

First, description will be made of a configuration of a ballast water treatment device 1 according to a first embodiment which is one embodiment of the present invention, with reference to FIG. 1.

The ballast water treatment device 1 is a device for increasing a concentration of a sterilizing component of ballast water in a ballast tank 60 arranged in a vessel. The ballast water treatment device 1 mainly includes the ballast tank 60, a main pipe 2, a circulation pipe 80, a ballast pump 10, a filter 20, a sterilizing component-introducing unit 40, a detour pipe 90, and a mixer 50.

The main pipe 2 connects to the ballast tank 60 to configure a supply flow path for guiding seawater drawn up into a vessel to the ballast tank 60. The main pipe 2 has one pipe port 2A into which seawater flows and the other pipe port 2B connected to the ballast tank 60. Seawater flows into the main pipe 2 from one pipe port 2A and flows through the main pipe 2 along a seawater flow direction D toward the other pipe port 2B so as to be guided to the ballast tank 60. Then, the seawater is stored in the ballast tank 60 as ballast water for stabilizing a hull.

A circulation pipe 80 to be described later is connected to the main pipe 2. The main pipe 2 and the circulation pipe 80 configure a circulation flow path for allowing ballast water in the ballast tank 60 to circulate.

The circulation pipe 80 is connected to the main pipe 2 to return a part of ballast water stored in the ballast tank 60 to the main pipe 2 so as to pass through the sterilizing component-introducing unit 40. Specifically, one end of the circulation pipe 80 is connected to the ballast tank 60 and the other end of the circulation pipe 80 is connected to a first connection part 2C located upstream of the ballast pump 10 and the sterilizing component-introducing unit 40 in the main pipe 2.

Connecting the circulation pipe 80 to the above position enables use of a pump pressure by the ballast pump 10. A part of ballast water in the ballast tank 60 flows into the main pipe 2 from the first connection part 2C via the circulation pipe 80. Then, the ballast water flowing into the main pipe 2 flows through the main pipe 2 along the flow direction D toward the other pipe port 2B so as to be returned to the ballast tank 60. In this circulation flow path, when the ballast water passes through the sterilizing component-introducing unit 40, a sterilizing component is introduced from the sterilizing component-introducing unit 40 into the ballast water. Returning of the ballast water containing the sterilizing component to the ballast tank 60 increases a concentration of the sterilizing component in the ballast water in the ballast tank 60.

The ballast pump 10 is arranged on the one pipe port 2A side in the main pipe 2. The ballast pump 10 has a function of supplying seawater caused to flow into the main pipe 2 to the ballast tank 60 and also has a function of returning ballast water in the ballast tank 60 from the main pipe 2 to the ballast tank 60 via the circulation pipe 80.

The filter 20 is arranged downstream of the ballast pump 10 in the main pipe 2 in the seawater flow direction D (on the ballast tank 60 side). The filter 20 removes foreign matters, microbes, and the like contained in seawater by filtering. Since the filter 20 is capable of satisfactorily removing foreign matters and microbes only by passing seawater through when taking the seawater into the ballast tank 60, ballast water to be returned to the main pipe 2 via the circulation pipe 80 does not necessarily need to pass through the filter 20.

The detour pipe 90 is connected to the main pipe 2 so that the ballast water can avoid (detour) the filter 20 when the ballast water flows through the main pipe 2. Specifically, one end of the detour pipe 90 is connected to a second connection part 2D located upstream of the filter 20, and the other end of the detour pipe 90 is connected to a third connection part 2E located downstream of the filter 20. Since ballast water has foreign matters, microbes, and the like removed when seawater to be taken into the ballast tank 60 is passed through the filter 20, the ballast water does not need to pass through the filter 20 again. Therefore, the detour pipe 90 connected to the upstream side and the downstream side of the filter 20 is provided so as to allow ballast water to detour the filter 20 through the detour pipe 90.

The sterilizing component-introducing unit 40 is arranged downstream of the filter 20 in the main pipe 2, and is a part for introducing a sterilizing component into seawater or ballast water flowing through the main pipe 2. Pouring a sterilizing component into seawater or ballast water enables extermination of microbes, bacteria, and the like present in the seawater or ballast water.

As the sterilizing component-introducing unit 40, any can be used that enables introduction of a sterilizing component into ballast water passing through the main pipe 2. Methods of introducing a sterilizing component by the sterilizing component-introducing unit 40 include, for example, a method for directly pouring a sterilizing component into the main pipe 2, a method for preparing a chlorine solution of high concentration and then pouring a necessary amount of the prepared solution into the main pipe 2, a method for arranging, in the main pipe 2, a sterilization agent which generates hypochlorous acid as a sterilizing component (a fourth embodiment), a method for generating hypochlorous acid by electrolyzing seawater or ballast water, and a method for pouring ozone as a sterilizing component into the main pipe 2 by an ozone generator. In terms of simple and reliable treatment, the sterilizing component-introducing unit 40 preferably introduces hypochlorous acid as a sterilizing component. In the present embodiment, description will be made of the method for pouring a necessary amount of a sterilizing component into the main pipe 2.

The mixer 50 is arranged downstream of the sterilizing component-introducing unit 40 in the main pipe 2. The mixer 50 uniforms a concentration of a sterilizing component in ballast water by stirring the ballast water into which the sterilizing component has been poured by the sterilizing component-introducing unit 40.

The ballast water treatment device 1 further includes a concentration measurement unit 41. As shown in FIG. 1, the concentration measurement unit 41 is attached to the ballast tank 60. The concentration measurement unit 41 is a sensor for measuring a chlorine concentration of ballast water in the ballast tank 60. Here, a "chlorine concentration (mg/L)" is measured as a total residual oxidant (TRO) concentration of seawater. The TRO concentration can be measured by a measuring instrument using a DPD reagent or the like. Although in terms of fully exhibiting sterilizing capability, the TRO concentration of ballast water is preferably set to be on the order of 1 mg/L or more and 10 mg/L or less, the TRO concentration is not limited to the above-described value. While in the present embodiment, the concentration measurement unit 41 is attached to the ballast tank 60, the position of the concentration measurement unit 41 is not limited thereto but can be any position that enables a concentration of a sterilizing component of the ballast water in the ballast tank 60 to be measured. For example, the concentration measurement unit 41 may be attached to the circulation pipe 80, or the concentration measurement unit 41 may be attached to the detour pipe 90, or the concentration measurement unit 41 may be attached to the main pipe 2 between the first connection part 2C and the second connection part 2D.

The ballast water treatment device 1 further includes a sterilizing component adjustment unit 70. The sterilizing component adjustment unit 70 determines an amount of a sterilizing component to be poured into the main pipe 2 from the sterilizing component-introducing unit 40 and an amount of ballast water to flow from the ballast tank 60 to the circulation pipe 80 on the basis of a measurement result of a concentration (chlorine concentration) of a sterilizing component in the ballast water by the concentration measurement unit 41. In the following, a configuration of the sterilizing component adjustment unit 70 will be described in detail.

The sterilizing component adjustment unit 70 includes a sterilizing component adjustment section 71 and a sterilizing component control section 72. The sterilizing component adjustment section 71 adjusts an amount of ballast water to flow from the ballast tank 60 to the circulation pipe 80, and also adjusts an amount of a sterilizing component to be introduced into the main pipe 2. The sterilizing component control section 72 receives an input of a measurement result of a concentration of a sterilizing component in ballast water from the concentration measurement unit 41 to control the sterilizing component adjustment section 71 on the basis of the measurement result.

As shown in FIG. 1, the sterilizing component adjustment section 71 includes a first switching valve 71A, a second switching valve 71B, and a third switching valve 71C.

The first switching valve 71A is arranged in the circulation pipe 80 to adjust an amount of circulating ballast water to flow through the circulation pipe 80 by opening/closing of the first switching valve 71A. The first switching valve 71A is preferably arranged at a position close to the first connection part 2C in the circulation pipe 80. Arrangement at this position enables reduction in a dead volume of seawater flowing through the circulation pipe 80 when the first connection part 2C is closed during ordinary filling of water.

The second switching valve 71B is arranged upstream of the first connection part 2C and adjusts an amount of seawater to be taken into the main pipe 2 by opening/closing of the second switching valve 71B.

The third switching valve 71C is arranged downstream of the second connection part 2D and upstream of the third connection part 2E to make adjustment for allowing seawater to flow to the filter 20 or ballast water to flow to the detour pipe 90 by opening/closing of the third switching valve 71C.

When seawater is taken into the ballast tank 60, the sterilizing component control section 72 closes the first switching valve 71A and opens the second switching valve 71B and the third switching valve 71C. Conversely, for circulating the ballast water of the ballast tank 60, the first switching valve 71A is opened and the second switching valve 71B and the third switching valve 71C are closed by the sterilizing component control section 72.

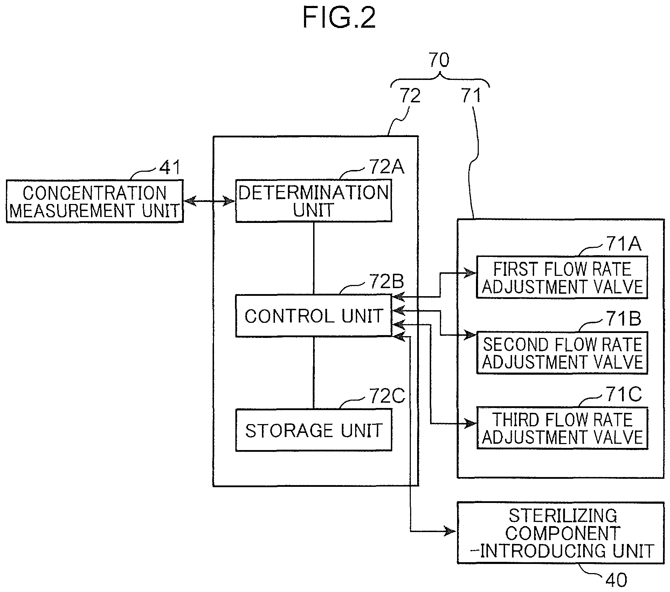

With reference to FIG. 2, the sterilizing component control section 72 is mainly configured with a determination unit 72A, a control unit 72B and a storage unit 72C. The sterilizing component control section 72 electromagnetically controls an amount of a sterilizing component to be introduced into the main pipe 2 from the sterilizing component-introducing unit 40. The determination unit 72A receives an input of a measurement result of a sterilizing component concentration of ballast water. The sterilizing component concentration is obtained by the concentration measurement unit 41. The storage unit 72C stores reference value data of a sterilizing component concentration of ballast water. The determination unit 72A compares the measurement result input from the concentration measurement unit 41 and the reference value stored in the storage unit 72C, and determines whether a sterilizing component needs to be introduced into the main pipe 2 from the sterilizing component-introducing unit 40 on the basis of the comparison result. Specifically, when a measurement value of the sterilizing component concentration is lower than the reference value, the determination unit 72A determines that a sterilizing component needs to be introduced into the main pipe 2 from the sterilizing component-introducing unit 40. On the other hand, when the measurement value is larger than the reference value, the determination unit 72A determines that a sterilizing component does not need to be introduced into the main pipe 2 from the sterilizing component-introducing unit 40.

The control unit 72B receives an input of the above determination result obtained by the determination unit 72A and, on the basis of the result, adjusts operation of the first to third switching valves 71A, 71B, and 71C and the ballast pump 10, and adjusts an amount of a sterilizing component to be introduced from the sterilizing component-introducing unit 40 into the main pipe 2. More specifically, when the determination unit 72A determines that a sterilizing component concentration of the ballast water needs to be increased, the control unit 72B opens the first switching valve 71A and closes the second and third switching valves 71B and 71C and introduces a sterilizing component from the sterilizing component-introducing unit 40 into the main pipe 2. On the other hand, when the determination unit 72A determines that a sterilizing component does not need to be introduced into the main pipe 2, the control unit 72B closes the first switching valve 71A and the second switching valve 71B or refrains from introducing a sterilizing component from the sterilizing component-introducing unit 40 into the main pipe 2. Thus, the control unit 72B feeds back a measured result of the sterilizing component concentration of the ballast water in the ballast tank 60 to determine whether the sterilizing component needs to be introduced. Then, by adjusting an amount of a sterilizing component to be introduced from the sterilizing component-introducing unit 40 into the main pipe 2 by the control unit 72B, the sterilizing component concentration of the ballast water can be adjusted to be not less than the reference value.

### <Adjustment of Sterilizing Component Concentration>

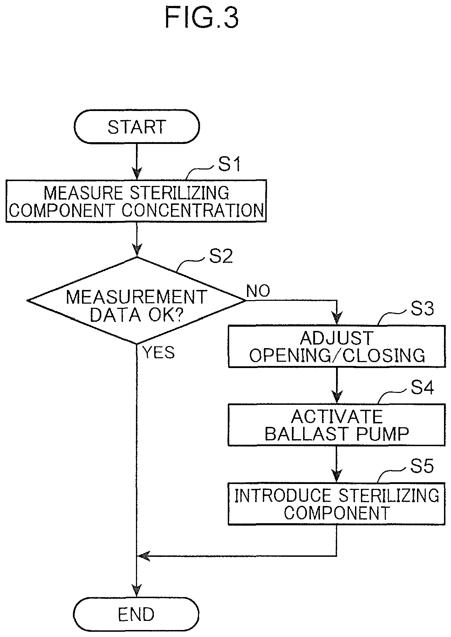

Next, description will be made of a method for adjusting a sterilizing component concentration (chlorine concentration) in the ballast water treatment device 1 with reference to the flowchart shown in FIG. 3.

First, the control unit 72B causes the concentration measurement unit 41 to measure a sterilizing component concentration of the ballast water in the ballast tank 60 in a measurement cycle (e.g., every 12 hours) set in advance (S1). The measurement data obtained here is input to the determination unit 72A.

Next, the determination unit 72A compares the input measurement data and the reference value data stored in the storage unit 72C to determine whether the measurement data is not less than the reference value or not (e.g., 1 mg/L or more) (S2). Then, when the determination is made that the measurement data is less than the reference value (S2: NO), the determination result is input to the control unit 72B. Then, the control unit 72B opens the first switching valve 71A and closes the second and third switching valves 71B and 71C so that the sterilizing component concentration reaches not less than the reference value (S3), and then activates the ballast pump 10 (S4). As a result, the ballast water in the ballast tank 60 flows through the main pipe 2 via the circulation pipe 80 to be returned to the ballast tank 60 via the detour pipe 90. At this time, introduction of a sterilizing component from the sterilizing component-introducing unit 40 into the main pipe 2 (S5) enables adjustment of an amount of a sterilizing component in the ballast water in the ballast tank 60.

### <Function and Effect of Ballast Water Treatment Device>

Next, description will be made of a function and an effect of the ballast water treatment device 1. The ballast water treatment device 1 includes the ballast tank 60, the main pipe 2 which guides ballast water to the ballast tank 60, the circulation pipe 80 which returns ballast water stored in the ballast tank 60 to the main pipe 2 which guides ballast water to the ballast tank 60, and the sterilizing component-introducing unit 40 which introduces a sterilizing component to a downstream side of the connection part 2C of the main pipe 2 connected with the circulation pipe 80. The ballast water treatment device is capable of conducting ballast water circulation of returning a part of the ballast water in the ballast tank 60 to the main pipe 2 via the circulation pipe 80 and returning the part of the ballast water from the main pipe 2 to the ballast tank 60. In this ballast water circulation, arranging the sterilizing component-introducing unit 40 downstream of the connection part 2C of the main pipe 2 with the circulation pipe 80 enables a sterilizing component to be poured, from the sterilizing component-introducing unit 40, into ballast water. As a result, ballast water containing a sterilizing component can be returned to the ballast tank 60. In other words, the ballast water treatment device 1 is capable of circulating the ballast water in the ballast tank 60, and additionally introduces a sterilizing component into ballast water by introducing a sterilizing component from the sterilizing component-introducing unit 40. This suppresses another growth of microbes.

Since the ballast water treatment device only needs addition of a simple facility obtained by newly providing the circulation pipe 80 with a configuration of a conventional ballast water treatment device, the ballast water treatment device 1 is easily applicable also to a vessel in which an installation space is hard to be ensured.

The ballast water treatment device 1 includes the sterilizing component adjustment unit 70 which adjusts an amount of a sterilizing component to be introduced from the sterilizing component-introducing unit 40 into the main pipe 2 when returning ballast water from the ballast tank 60 to the ballast tank 60 via the circulation pipe 80 and the main pipe 2. Provision of the sterilizing component adjustment unit 70 enables adjustment of an amount of a sterilizing component to be introduced from the sterilizing component-introducing unit 40 into the main pipe 2. As a result, the ballast water in the ballast tank 60 can be adjusted to have a proper sterilizing component concentration. This prevents corrosion from being generated in the ballast tank 60 and the main pipe 2 and the circulation pipe 80 through which ballast water flows. Additionally, since use of an excessive amount of a sterilization agent is not required, material costs are less liable to be increased, and it is less likely to need a lot of time and neutralizer for neutralization treatment of a sterilizing component at the time of discharging ballast water.

The ballast water treatment device 1 includes the concentration measurement unit 41 which measures a sterilizing component concentration of ballast water stored in the ballast tank 60. A sterilizing component concentration of the ballast water in the ballast tank 60 is measured by the concentration measurement unit 41 and the measurement result is fed back to the sterilizing component adjustment unit 70. This enables the sterilizing component adjustment unit 70 to introduce a proper amount of a sterilizing component into the main pipe 2, thereby appropriately increasing the sterilizing component concentration of the ballast water in the ballast tank 60.

A ballast water treatment method using the ballast water treatment device 1 includes a circulation step of returning ballast water stored in the ballast tank 60 to the ballast tank 60 from the main pipe 2 via the circulation pipe 80. This circulation step enables a sterilizing component to be poured into the ballast water from the sterilizing component-introducing unit 40 arranged at the downstream side of a part of the main pipe 2 connected with the circulation pipe 80, thereby enabling the ballast water with a sterilizing component poured to be returned to the ballast tank 60. This enables an increase in a sterilizing component concentration of the ballast water in the ballast tank 60 to suppress microbes from regrowing.

The ballast water treatment method includes a step of measuring a sterilizing component concentration of ballast water stored in the ballast tank 60, and a step of adjusting an amount of a sterilizing component to be introduced into the main pipe 2 in the circulation step on the basis of a result thus obtained by the measurement. With these steps, an amount of a sterilizing component to be introduced into the main pipe 2 can be adjusted after feeding back a measurement result of a sterilizing component concentration of the ballast water in the ballast tank 60, so that the sterilizing component concentration of the ballast water can be appropriately increased.

### (Modification Example)

Although in the ballast water treatment device 1 of the first embodiment, an amount of a sterilizing component to be introduced into the main pipe 2 is adjusted on the basis of a measurement result obtained by the concentration measurement unit 41, the device is not limited to such adjustment of an amount of a sterilizing component in ballast water. For example, a sterilizing component concentration of ballast water may be adjusted by flowing ballast water through the circulation pipe 80 and adjusting an amount of a sterilizing component to be introduced into the main pipe 2 on the basis of time before scheduled date and time when a vessel mounted with the above ballast water treatment device 1 calls at a port. Specifically, by causing ballast water to flow through the circulation pipe 80 several hours to several tens hours before, which is obtained by counting backwards from time of vessel's call at the port, a sterilizing component concentration of ballast water at the time of the vessel's call at the port can be properly adjusted to enable treatment of ballast water immediately before the vessel's call at the port.

### Second Embodiment

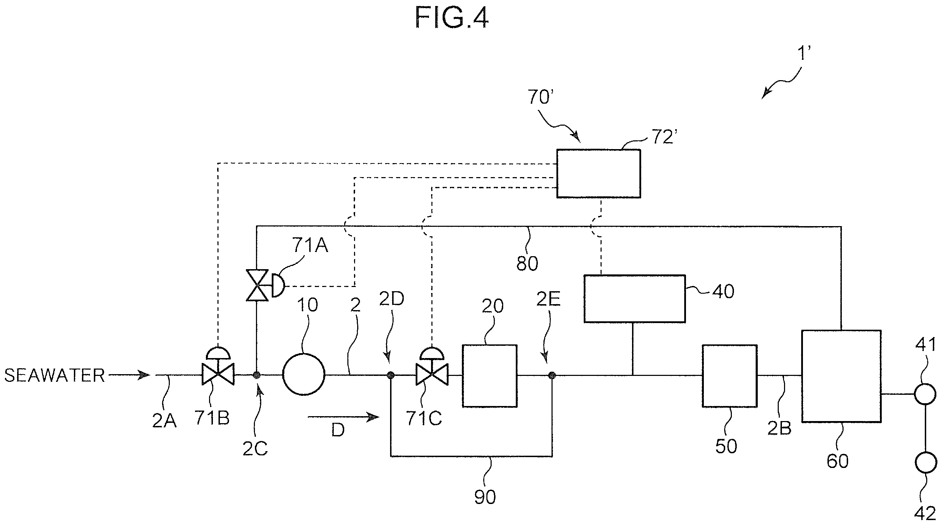

Description will be made of a ballast water treatment device 1' of a second embodiment which is another embodiment of the present invention. As shown in FIG. 4, the ballast water treatment device 1' of the second embodiment has the same configuration as that of the first embodiment except that an input unit 72' through which a command to open/close each of switching valves 71A, 71B, and 71C is input by an operator manually is provided in place of the sterilizing component control section 72, which adjusts opening/closing of each of the switching valves 71A, 71B, and 71C, of the first embodiment.

In the following, description will be made only of a part modified from the ballast water treatment device 1 of the first embodiment and not of the same parts. Regarding notation of a reference number of each member in the second embodiment, the same member as that in the first embodiment will be given the same reference code and a partly modified member will be given a dash (') at an end of a reference code.

In the ballast water treatment device 1 ' of the second embodiment, an operator inputs, to the input unit 72', a command to make ballast water flow from a ballast tank 60 to a circulation pipe 80. It is possible to control, on the basis of the command, opening/closing of each of the first to third switching valves 71A, 71B and 71C and a ballast pump 10 to return ballast water to a main pipe 2 via the circulation pipe 80. At this time, a sterilizing component concentration of the ballast water in the ballast tank 60 can be increased by pouring the sterilizing component into the main pipe 2 from a sterilizing component-introducing unit 40.

For making an operator's command appropriate, an informing device 42 is connected to a concentration measurement unit 41. The informing device 42 is for informing an operator of a measurement result of the concentration measurement unit 41.

Regarding the above informing device 42, a sterilizing component of ballast water is gradually consumed according to time for keeping the water in the ballast tank 60. When the sterilizing component concentration is lower than a reference value due to this consumption, information thereof is input from the concentration measurement unit 41 to the informing device 42. The information is designed to be displayed on the informing device 42, a sterilizing component adjustment unit 70, or the like. This enables an operator to grasp that the sterilizing component concentration is lower than the reference value.

By being operated by the operator on the basis of information transmitted from the informing device 42, the input unit 72' issues a command to open the first switching valve 71A, a command to close the second and third switching valves 71 B and 71C, a command to activate the ballast pump 10 and a command to pour a sterilizing component from the sterilizing component-introducing unit 40 into the main pipe 2. By opening/closing each switching valve, as well as activating the ballast pump 10 by the operator on the basis of the command, the ballast water in the ballast tank 60 is caused to flow through the circulation pipe 80. This enables a sterilizing component to be poured from the sterilizing component-introducing unit 40 into the main pipe 2, thereby increasing a sterilizing component concentration of the ballast water at appropriate timing.

It is configured such that as a result of an increase in the sterilizing component concentration of the ballast water, when the sterilizing component concentration of the ballast water measured by the concentration measurement unit 41 reaches not less than the reference value, information thereof is input from the concentration measurement unit 41 to the informing device 42, and the information is displayed on the informing device 42. This enables the operator to grasp that the sterilizing component concentration reaches not less than the reference value.

By being operated by the operator on the basis of information transmitted from the informing device 42, the input unit 72' issues a command to close the first switching valve 71A, a command to stop the ballast pump 10, or a command to stop pouring of a sterilizing component from the sterilizing component-introducing unit 40 into the main pipe 2. By closing the first switching valve 71A, stopping the ballast pump 10 or stopping pouring of a sterilizing component from the sterilizing component-introducing unit 40 into the main pipe 2 by the operator on the basis of this command, additional supply of the sterilizing component can be stopped.

As the concentration measurement unit 41, any can be used that is capable of sensing a concentration of a sterilizing component stored in the ballast tank 60, and other kinds of sensor can be also similarly used. Additionally, a mode of display by the informing device 42 is not limited to the above mode in which a sterilizing component concentration of ballast water is displayed, but may be notified to an operator that a concentration is lower than the reference value using an alarm such as sound and the like, or an optical signal such as red, blue, and the like.

### <Function and Effect of Ballast Water Treatment Device>

Also in explanation of functions and effects, only a function and an effect particular to the ballast water treatment device 1' of the second embodiment will be described and the same function and effect as those of the first embodiment will not be described.

In the ballast water treatment device 1' of the second embodiment, by being operated by an operator, the input unit 72' issues a command to make ballast water flow from the ballast tank 60 to the circulation pipe 80. This enables ballast water to be returned to the main pipe 2 via the circulation pipe 80 at timing for increasing a sterilizing component concentration of the ballast water, and enables a sterilizing component to be poured from the sterilizing component-introducing unit 40 into the main pipe 2, thereby appropriately increasing a sterilizing component concentration of the ballast water in the ballast tank 60. Timing for causing the ballast water in the ballast tank 60 to flow through the circulation pipe 80 and an amount of circulation are designed to be determined by an operator on the basis of a notification (alarm etc.) by the informing device 42.

A ballast water treatment method using the ballast water treatment device 1' of the second embodiment includes a step of inputting a command to the input unit 72', the command making ballast water flow from the ballast tank 60 to the circulation pipe 80, and a step of adjusting an amount of a sterilizing component to be poured from the sterilizing component-introducing unit 40 into the main pipe 2 on the basis of the input command. With these steps, ballast water can be returned to the main pipe 2 via the circulation pipe 80, so that the sterilizing component concentration of the ballast water in the ballast tank 60 can be appropriately increased.

### Third Embodiment

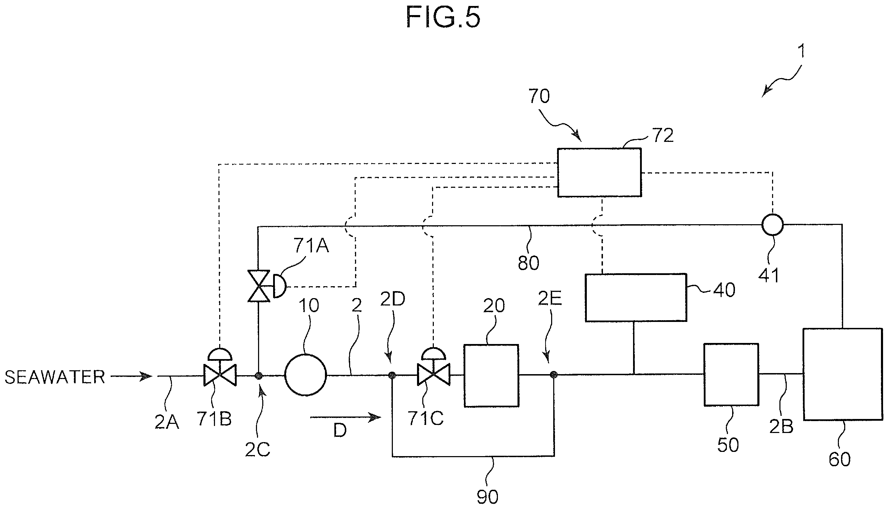

Next, description will be made of a ballast water treatment device of a third embodiment which is still another embodiment of the present invention. As shown in FIG. 5, the ballast water treatment device of the third embodiment has the same configuration as that of the first embodiment except that a concentration measurement unit 41 is provided in a circulation pipe 80.

In a case where the concentration measurement unit 41 is provided at such the position, a first switching valve 71A is opened and second and third switching valves 71B and 71C are closed, irrespective of whether a sterilizing component is poured from a sterilizing component-introducing unit 40. The ballast water stored in a ballast tank 60 is thus kept flowing to the circulation pipe 80. Then, the concentration measurement unit 41 is caused to measure a sterilizing component concentration of ballast water flowing through the circulation pipe 80 in a predetermined measurement cycle (e.g., every 12 hours). When the sterilizing component concentration of the ballast water is less than a reference value, a proper amount of a sterilizing component is introduced into a main pipe 2 from the sterilizing component-introducing unit 40. On the other hand, when the sterilizing component concentration of the ballast water is not less than the reference value, pouring the sterilizing component from the sterilizing component-introducing unit 40 into the main pipe 2 is stopped.

A control unit 72B receives an input of a determination result obtained by a determination unit 72A. The control unit 72B adjusts an amount of a sterilizing component to be introduced from the sterilizing component-introducing unit 40 into the main pipe 2 on the basis of the determination result obtained by the determination unit 72A. More specifically, when the determination unit 72A determines that the sterilizing component concentration of the ballast water needs to be increased, the control unit 72B introduces a necessary amount of a sterilizing component from the sterilizing component-introducing unit 40 into the main pipe 2. Conversely, when the determination unit 72A determines that it is not necessary to introduce a sterilizing component into the main pipe 2, the control unit 72B refrains from introducing a sterilizing component from the sterilizing component-introducing unit 40 into the main pipe 2. Specifically, in a case, for example, where with respect to a reference value of 3 mg/L for a sterilizing component concentration of ballast water, a TRO concentration of the ballast water in the ballast tank is set to be 1 mg/L and a pump pressure of a ballast pump is set such that a circulation flow rate of the ballast water is 4 m³/minute, a sterilizing component solution with a sterilizing component concentration of 2000 mg/L is poured from the sterilizing component-introducing unit 40 into the main pipe 2 at a flow velocity of 4 L/minute. This enables the sterilizing component of the ballast water to be supplemented with 2 mg/L and enables the sterilizing component concentration of the ballast water to be increased to 3 mg/L as the reference value. By thus measuring the sterilizing component concentration of the ballast water in the ballast tank 60, feeding back a result of the measurement, and then adjusting an amount of a sterilizing component to be introduced from the sterilizing component-introducing unit 40 into the main pipe 2, the sterilizing component concentration of the ballast water can be adjusted to be the reference value.

A concentration measurement device other than the concentration measurement unit 41 can be connected to the ballast tank 60. This enables a change in a sterilizing component concentration of circulating ballast water to be grasped. In this case, the ballast water is circulated for a time period required for the ballast water in the ballast tank 60 to be replaced. Thereafter, a sterilizing component concentration of the ballast water in the ballast tank 60 is measured, and a sterilizing component concentration of the ballast water in the ballast tank is adjusted while being checked whether a measurement value is within a set range including the reference value (e.g., 3 ± 1 mg/L). Additionally, a concentration measurement device other than the concentration measurement unit 41 may be connected downstream of a mixer 50 in the main pipe 2. In this case, since the sterilizing component concentration of the ballast water in the ballast tank 60 is increased as the ballast water is circulated, the sterilizing component-introducing unit 40 is controlled such that the sterilizing component concentration to be poured into the main pipe 2 is reduced accordingly. This leads to adjustment of the sterilizing component concentration of ballast water in the ballast tank.

### Fourth Embodiment

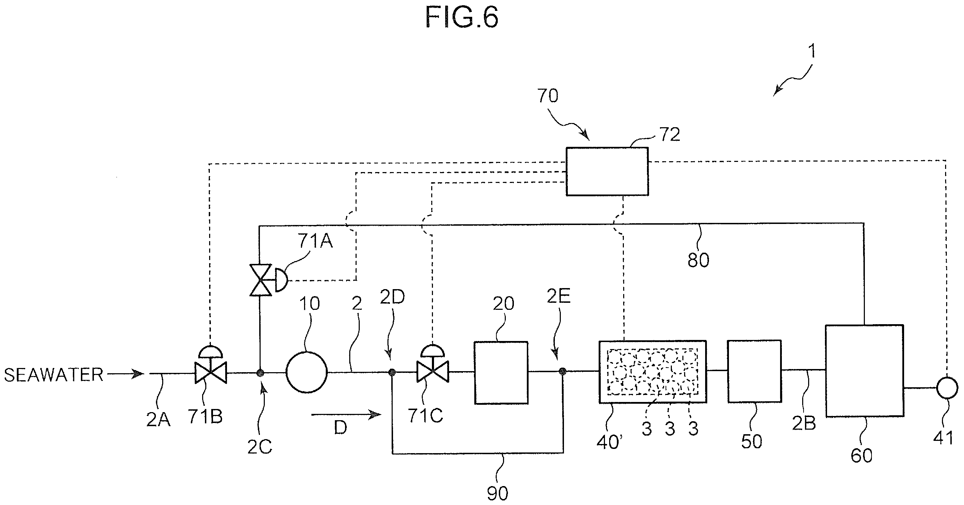

Next, description will be made of a ballast water treatment device of a fourth embodiment which is yet another embodiment of the present invention. As shown in FIG. 6, the ballast water treatment device of the fourth embodiment has the same configuration as that of the first embodiment except that a chemical container 40' including a sterilization agent 3 is provided as the sterilizing component-introducing unit 40. In the present embodiment, a sterilizing component adjustment unit 70 adjusts an amount of a sterilizing component to be introduced by adjusting an amount of circulation of the ballast water to flow through a circulation pipe 80. In other words, the more an amount of circulation of the ballast water becomes which is caused by the sterilizing component adjustment unit 70 to flow through the chemical container 40', the more the sterilization agent 3 dissolves in the ballast water to enable addition of a sterilizing component.

The sterilization agent 3 is a chemical agent which is solid at normal temperature and solution thereof into seawater flowing in a main pipe 2 exterminates microbes, bacteria, and the like present in the seawater.

As the sterilization agent 3, a chlorine-based sterilization agent is preferably used. As a chlorine-based sterilization agent, at least one kind selected from the group consisting of chlorinated isocyanurate and hypochlorite is preferably used. Examples of hypochlorite include calcium hypochlorite and the like. As the sterilization agent 3, chlorinated isocyanurate is preferably used in view of high preservation stability in a temperature region which exceeds a room temperature and involving no side product.

The chlorinated isocyanurate is a compound having a structure in which a hydrogen atom bonded to a nitrogen atom of isocyanuric acid is substituted with a chlorine atom, the compound including trichloroisocyanuric acid having a hydrogen atom substituted with three chlorine atoms (a structural formula (1) below) and sodium dichloroisocyanurate having a hydrogen atom substituted with two chlorine atoms (a structural formula (2) below). These chlorinated isocyanurates dissolve into seawater to generate hypochlorous acid (HOCl) having sterilization properties, which sterilizes seawater flowing through the main pipe 2.

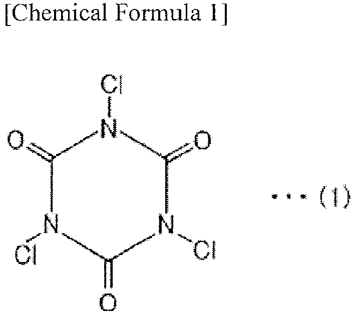

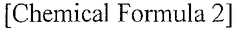

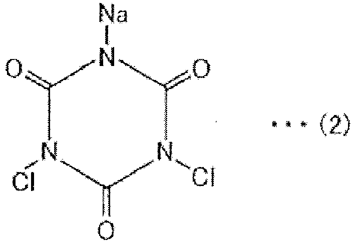

An amount of the sterilization agent 3 is determined according to an amount of ballast water and a concentration of a sterilizing component of the ballast water. In a case, for example, where an effective chlorine concentration of a sterilization agent is 50% and 1000 tons of ballast water with a sterilizing component concentration of 5 mg/L is prepared, an amount of a necessary sterilization agent is calculated to be 10 kg.

Although a type of sterilization agent is not particularly limited and any of granule, powder, tablet, and the like can be used, granule or tablet with a diameter of 1 mm to 100 mm is preferable in view of handleability. It is preferable to appropriately determine a type of the sterilization agent according to a rate of taking in seawater, a capacity of a ballast tank, an amount of ballast water, the number of days at sea, and the like. For example, when a TRO concentration needs to be increased in a short time, or when a managed temperature of ballast water is high, granule is preferably used. When the effect needs to last for a relatively long time, or when a managed concentration of ballast water is low, tablet is preferably used.

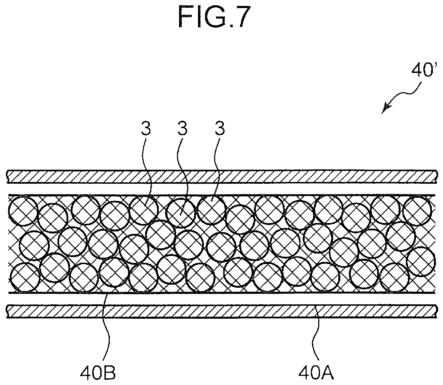

A configuration of the chemical container 40' to be filled with the sterilization agent 3 will be described in detail with reference to FIG. 7. The chemical container 40' includes a container main body 40A and a mesh type member 40B housed in the container main body 40A. The mesh type member 40B is filled with a plurality of sterilization agents 3. The container main body 40A has a slit (not shown) provided on a side surface thereof. Ballast water flows to the inside of the container main body 40A through the slit. The mesh type member 40B has a mesh opening to such an extent that enables the sterilization agent 3 to be internally held and to allow seawater (ballast water in some case) to satisfactorily flow in.

Seawater flowing into the container main body 40A from the one pipe port 2A side of the main pipe 2 (left side in FIG. 6) passes through the mesh type member 40B filled with the sterilization agent 3 and thereafter flows out to a ballast tank 60 side (right side in FIG. 6). In this process, the sterilization agent 3 dissolves in the seawater to generate hypochlorous acid, resulting in increasing a chlorine concentration of the ballast water.

The present invention is not limited to the present embodiment in which the mesh type member 40B is filled with the sterilization agent 3. The container main body 40A may be directly filled with the sterilization agent 3 without the configuration of the mesh type member 40B. Additionally, the present invention is not limited the present embodiment in which the chemical container 40' is arranged in the main pipe 2 and the chemical container 40' is filled with the sterilization agent 3. The sterilization agent 3 may be directly arranged inside the main pipe 2 without the configuration of the chemical container 40'. In this case, in order to prevent the sterilization agent 3 from flowing to the ballast tank 60 side due a flow of the seawater, the mesh type member 40B for interrupting the sterilization agent 3 may be arranged inside the main pipe 2.

### <Adjustment of Sterilizing Component Concentration>

Adjustment of a sterilizing component concentration (chlorine concentration) of the ballast water treatment device 1 of the present embodiment is conducted in the following manner. First, a sterilizing component concentration of ballast water in the ballast tank 60 is measured by a concentration measurement unit 41 in a predetermined measurement cycle (e.g., every 12 hours). Then, the measurement data and reference value data are compared to determine whether the measurement data is not less than the reference value (e.g., not less than 3 mg/L or not). When the measurement data is less than the reference value, the first switching valve 71A is opened, the second and third switching valves 71B and 71C are closed and the ballast pump 10 is activated such that the sterilizing component concentration is not less than the reference value. As a result, the ballast water in the ballast tank 60 flows through the main pipe 2 via the circulation pipe 80 to return to the ballast tank 60 via the detour pipe 90. At this time, since the circulating ballast water passes through the sterilization agent 3 in the chemical container 40', a sterilizing component dissolves from the sterilization agent 3 and then is introduced into the ballast water in the ballast tank 60.

As described above, the embodiment enables provision of a ballast water treatment device and a ballast water treatment method which allow an increase in a sterilizing component concentration of ballast water in a ballast tank.

The ballast water treatment device provided by each of the embodiments includes a ballast tank, a main pipe which guides ballast water to the ballast tank, a circulation pipe which returns ballast water stored in the ballast tank to the main pipe, and a sterilizing component-introducing unit which introduces the sterilizing component to the downstream side of a part of the main pipe connected with the circulation pipe.

The ballast water treatment device enables ballast water circulation in which a part of ballast water in the ballast tank is returned to the main pipe via the circulation pipe and then is returned from the main pipe to the ballast tank. In the ballast water circulation, since the sterilizing component-introducing unit is arranged at the downstream side of a part of the main pipe connected with the circulation pipe and introduces a sterilizing component into the main pipe from the sterilizing component-introducing unit, ballast water including a sterilizing component can be returned to the ballast tank. In other words, the ballast water treatment device enables additional introduction of a sterilizing component into ballast water from the sterilizing component-introducing unit, thereby suppressing microbes from regrowing. The ballast water treatment device also has an advantage of requiring, in advance, no adjustment of an amount of a sterilization agent to be charged because a sterilizing component can be introduced into ballast water by returning the ballast water in the ballast tank to the circulation pipe.

Moreover, since the ballast water treatment device only needs addition of a simple facility obtained by newly providing the circulation pipe in a configuration of a conventional ballast water treatment device, the ballast water treatment device is easily applicable also to a vessel in which an installation space is hard to be ensured.

Note that when a large amount of a sterilizing component is poured into the ballast water, some sterilizing component might cause such problems as corrosion generated in a ballast tank and a main pipe, an increase in an amount of a sterilization agent causing to increase material costs, needs of a lot of time and neutralizer for neutralization treatment of a sterilizing component at the time of discharging ballast water.

In order to solve the problems, the above ballast water treatment device may further include a sterilizing component adjustment unit which adjusts an amount of a sterilizing component to be introduced into the main pipe.

The configuration enables adjustment of an amount of a sterilizing component which is to be introduced from the sterilizing component-introducing unit into the main pipe. As a result, ballast water in the ballast tank can be adjusted to have a proper sterilizing component concentration.

The ballast water treatment device further includes a concentration measurement unit which measures a sterilizing component concentration of ballast water stored in the ballast tank. The sterilizing component adjustment unit may adjust an amount of a sterilizing component to be introduced from the sterilizing component-introducing unit into the main pipe on the basis of a measurement result obtained by the concentration measurement unit.

With the above configuration, since a sterilizing component concentration of ballast water in the ballast tank is measured and the measurement result is fed back to the sterilizing component adjustment unit, an appropriate amount of a sterilizing component can be introduced to main pipe. Thus, a sterilizing component concentration of the ballast water in the ballast tank can be appropriately increased.

As a mode other than the above configuration, the ballast water treatment device may have an input unit which receives a command to make ballast water flow from the ballast tank to the circulation pipe, and the sterilizing component adjustment unit may adjust an amount of a sterilizing component to be introduced from the sterilizing component-introducing unit into the main pipe on the basis of the command received by the input unit.

With the above configuration, since an amount of a sterilizing component to be introduced from the sterilizing component-introducing unit into the main pipe is input by an operator, an amount of a sterilizing component to be introduced into ballast water can be adjusted to appropriately increase a sterilizing component concentration of the ballast water in the ballast tank.

An amount of a sterilizing component to be introduced from the sterilizing component-introducing unit into the main pipe may be adjusted on the basis of a time period before the scheduled date and time when a vessel mounted with the ballast water treatment device calls at a port.

With the above configuration, since an appropriate amount of a sterilizing component is introduced into ballast water in the ballast tank in time for date and time when a vessel calls at a port (e.g., several hours or several tens of hours before a call at the port), the ballast water can be treated immediately before the vessel calls at the port. Accordingly, even when ballast water is examined at the time of discharging ballast water, a risk that the number of microbes or the like exceeds a reference value is extremely low.

The ballast water treatment method according to one aspect of the present embodiment includes a circulation step of returning ballast water stored in a ballast tank from a main pipe to the ballast tank via a circulation pipe. In the circulation step, by introducing a sterilizing component to a downstream side of a part of the main pipe connected with the circulation pipe, the ballast water containing the sterilizing component is returned to the ballast tank.

With the above configuration, in the circulation step, a sterilizing component can be introduced into the main pipe to return ballast water containing the sterilizing component to the ballast tank. This enables an increase in a sterilizing component concentration of the ballast water in the ballast tank, thereby suppressing microbes or bacteria from regrowing.

The ballast water treatment method may further include a step of measuring a sterilizing component concentration of ballast water stored in the ballast tank, and a step of adjusting an amount of a sterilizing component to be introduced into the main pipe in the circulation step on the basis of a result obtained by the measurement.

Including the above steps enables adjustment of an amount of a sterilizing component to be introduced into the main pipe after feeding back a measurement result of a sterilizing component concentration of ballast water in the ballast tank, so that the sterilizing component concentration of the ballast water can be appropriately increased.

As another mode other than the above mode, the ballast water treatment method may further include a step of inputting a command to make ballast water flow from the ballast tank to the circulation pipe, and a step of adjusting an amount of a sterilizing component to be introduced into the main pipe in the circulation step on the basis of the input command.

With the above configuration, input of a command to make ballast water flow from the ballast tank to the circulation pipe by an operator enables the ballast water to be returned to the main pipe via the circulation pipe. This enables introduction of an appropriate amount of a sterilizing component into ballast water, so that return of the ballast water to the ballast tank leads to an increase in a sterilizing component concentration of the ballast water in the ballast tank.

As still another mode other than the above mode, the ballast water treatment method may further include a step of adjusting an amount of a sterilizing component to be introduced into the main pipe in the circulation step on the basis of a time period before the scheduled date and time when a vessel mounted with the ballast water treatment device calls at a port.

With the above configuration, by introducing an appropriate amount of a sterilizing component into a main pipe in time for date and time when a vessel calls at a port (e.g., several hours or several tens of hours before a call at the port), the ballast water can be treated immediately before the vessel calls at the port. Accordingly, even when ballast water is examined at the time of discharging ballast water, a risk that the number of microbes or the like exceeds a reference value is extremely low.

### Examples

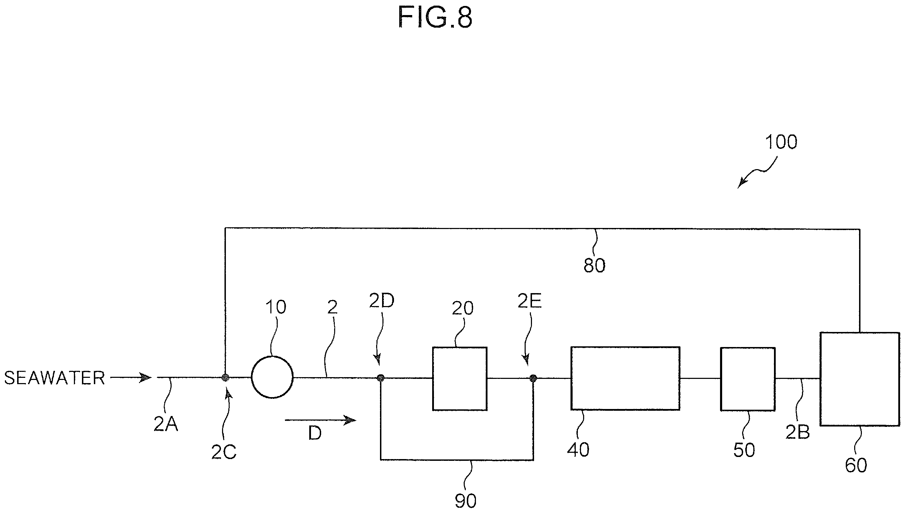

In the present example, using a ballast water treatment device 100 shown in FIG. 8, 100 m³ of seawater was supplied to a ballast tank 60 with a capacity of about 200 m³. Specifically, first, a ballast pump 10 was activated to take in seawater from a pipe port 2A of a main pipe 2 by pump pressure. Microbes or particles in the seawater were removed by allowing the seawater to pass through a filter 20.

Next, by pouring a solution of TRO 2000 mg/L with dissolved sodium dichloroisocyanurate from a sterilizing component-introducing unit 40 to the seawater after being filtered by the above filter, the seawater was made to include a chlorine component. By stirring the seawater including a chlorine component by a mixer 50, a chlorine component in the seawater was made uniform to become ballast water, and the ballast tank 60 was filled with the ballast water.

The ballast water immediately after the water filling and the ballast water after a lapse of after 10 days were sampled.

Next, after a first switching valve 71A was opened, and a second switching valve 71B and a third switching valve 71C were closed after 10 days from water filling, the ballast water in the ballast tank 60 was caused to flow through the main pipe 2 via a circulation pipe 80 by activating the ballast pump 10. The ballast water flowing into the main pipe 2 was passed through the sterilizing component-introducing unit 40 and the mixer 50 via a detour pipe 90 so as to be returned to the ballast tank 60 without passing through the filter 20. The amount of the sterilizing component to be poured by the sterilizing component-introducing unit 40 was adjusted such that a TRO concentration of the ballast water immediately after passing through the sterilizing component-introducing unit 40 was 3 mg/L. By conducting circulation of the above ballast water for one hour, 100 tons of ballast water was returned to the ballast tank 60 from the main pipe 2 via the circulation pipe 80. The ballast water after the circulation was sampled.

### <Evaluation>

With respect to each of the above sampled three kinds of ballast water (the ballast water immediately after filling, the ballast water after a lapse of 10 days after filling, and the ballast water in the ballast tank after the ballast water circulation), a TRO concentration and the number of heterotrophic bacteria (seawater medium) were measured. Additionally, as a comparison, the number of heterotrophic bacteria of the seawater was measured. As the TRO concentration, a value measured by a DPD colorimeter II (product of Hach Company) was adopted. The result is shown in Table 1 below.

**[Table 1]**

| Measurement target | Seawater | Immediately after filling | After a lapse of 10 days | After circulation |
|---|---|---|---|---|
| TRO concentration (mg/L) | - | 5.0 | 0.2 | 3.2 |
| The number of bacteria (cfu/cc) | 3.4 × 10⁶ | 7.4 × 10¹ | 4.6 × 10⁵ | 1.2 × 10¹ |

"Immediately after filling", "after a lapse of 10 days", and "after circulation" in Table 1 represent sampled ballast water immediately after ballast water filling, ballast water after a lapse of 10 days after filling, and ballast water after being circulated, respectively.

As is clear from the results shown in Table 1, although the ballast water immediately after water filling had a TRO concentration of 5.0 mg/L, the ballast water after a lapse of 10 days after filling had the TRO concentration lowered to 0.2 mg/L.

From comparison between data of the number of bacteria in the ballast water "immediately after filling" and the ballast water "after a lapse of 10 days" in Table 1, it has been clear that even when the number of bacteria is suppressed to be low by a sterilization agent at the time of water filling, the number of bacteria is regrown after 10 days after water filling. Thus, it is considered that another growth of bacteria is caused by reduction in the TRO concentration in the ballast water as shown by the data shown in the TRO concentration in Table 1.

Then, in response to regrowth of the bacteria, a chlorine component was introduced from the sterilizing component-introducing unit 40 into the ballast water by circulating ballast water using the circulation pipe 80. Then, when the TRO concentration of the ballast water was increased up to 3.2 mg/L, the number of bacteria could be suppressed to approximately 1.2 × 10¹ cfu/cc as shown by data of the number of bacteria "after circulation" in Table 1.

From the foregoing result, by returning the ballast water in the ballast tank 60 to the main pipe 2 via the circulation pipe 80, and by additionally introducing a sterilizing component from the sterilizing component-introducing unit 40, a sterilizing component concentration of the ballast water in the ballast tank 60 could be increased. It becomes clear that this suppresses regrowth of the number of bacteria, and shows the effect of the present invention.

The embodiments disclosed herein are all illustrative only in any manner and are not to be construed as limiting. The range of the present invention is shown not by the above description but by a scope of claims for patent and intends to include all changes within a meaning and a range equivalent to the scope of claims for patent.

## Claims

1. A ballast water treatment device (1) comprising:
a ballast tank (60);
a main pipe (2) which guides ballast water to the ballast tank (60);
a ballast pump (10) arranged in the main pipe (2);
a circulation pipe (80) which returns ballast water stored in the ballast tank (60) to the main pipe (2);
a sterilizing component-introducing unit (40) for introducing a sterilizing component to a downstream side of a part of the main pipe (2), the part being connected with the circulation pipe (80), one end of the circulation pipe (80) being connected to the ballast tank (60) and the other end of the circulation pipe (80) being connected to a first connection part (2C) located upstream of the ballast pump (10) and the sterilizing component-introducing unit (40) in the main pipe (2);
a concentration measurement unit (41) for measuring a sterilizing component concentration of ballast water stored in the ballast tank,
a filter (20) arranged downstream of the ballast pump (10) in the main pipe (2), the sterilizing component-introducing unit (40) being arranged downstream of the filter (20) in the main pipe (2);
a detour pipe (90) detouring the filter (20) and including a first end and a second end, the first end being connected to a second connection part (2D) of the main pipe (2) located upstream of the filter (20) and downstream of the ballast pump (10), and the second end being connected to a third connection part (2E) of the main pipe (2) located downstream of the filter (20) and upstream of the sterilizing component-introducing unit (40);
a mixer (50) arranged downstream of the sterilizing component-introducing unit (40) in the main pipe (2);
a first switching valve (71A) arranged in the circulation pipe (80) to adjust an amount of circulating ballast water to flow through the circulation pipe (80);
a second switching valve (71B) arranged upstream of the first connection part (2C) to adjust an amount of seawater to be taken into the main pipe (2);
a third switching valve (71C) arranged downstream of the second connection part (2D) and upstream of the third connection part (2E) to make adjustment for allowing seawater to flow to the filter (20) or ballast water to flow to the detour pipe (90); and
a control unit (72B) configured to open the first switching valve (71A) and close the second and third switching valves (71B, 71C) and activate the ballast pump (10) so that the ballast water flowing through the main pipe (2) and returned from the ballast tank (60) via the circulation pipe (80) returns to the ballast tank (60) via the detour pipe (90), wherein an amount of a sterilizing component in the ballast water in the ballast tank (60) is adjusted by introducing the sterilizing component from the sterilizing component-introducing unit (40) into the main pipe (2) when the ballast water in the ballast tank (60) flows through the main pipe (2) via the circulation pipe (80) and is returned to the ballast tank (60) via the detour pipe (90).

2. The ballast water treatment device according to claim 1, further comprising a sterilizing component adjustment unit (70) which adjusts an amount of a sterilizing component to be introduced from the sterilizing component-introducing unit (40) into the main pipe (2), the sterilizing component adjustment unit (70) including the third switching valve (71C) and the control unit (72B).

3. The ballast water treatment device according to claim 2, wherein the sterilizing component adjustment unit (70) adjusts an amount of a sterilizing component to be introduced from the sterilizing component-introducing unit (40) into the main pipe (2) on the basis of a measurement result obtained by the concentration measurement unit (41).

4. The ballast water treatment device according to claim 2, further comprising
an input unit (72') which receives a command to make ballast water flow from the ballast tank (60) to the circulation pipe (80),
wherein the sterilizing component adjustment unit (70) adjusts an amount of a sterilizing component to be introduced from the sterilizing component-introducing unit (40) into the main pipe (2) on the basis of the command received by the input unit (72').

5. The ballast water treatment device according to claim 2 or 3, wherein an amount of a sterilizing component to be introduced from the sterilizing component-introducing unit (40) into the main pipe (2) is adjusted on the basis of a time period before a scheduled date and time when a vessel mounted with the ballast water treatment device according to claim 2 or 3 calls at a port.

6. The ballast water treatment device according to claim 1, wherein a chemical container (40') including a sterilization agent (3) is provided as the sterilizing component-introducing unit (40),
the chemical container (40') includes a container main body (40A) and a mesh type member (40B) housed in the container main body (40A) and filled with a plurality of sterilization agents (3), and
the container main body (40A) has a slit provided on a side surface of the container main body (40A), the ballast water flowing to the inside of the container main body (40A) through the slit.

7. A ballast water treatment method using the ballast water treatment device (1) according to any of claims 1 to 6, the method comprising a circulation step of returning ballast water stored in the ballast tank (60) to the main pipe (2) via a circulation pipe (80) and returning ballast water from the main pipe (2) to the ballast tank (60),
wherein, in the circulation step, by introducing a sterilizing component to a downstream side of the part of the main pipe (2) connected with the circulation pipe (80), the ballast water including the sterilizing component is returned to the ballast tank (60).

8. The ballast water treatment method according to claim 7, further comprising:
a step of measuring a sterilizing component concentration of ballast water stored in the ballast tank (60); and
a step of adjusting an amount of a sterilizing component to be introduced into the main pipe (2) in the circulation step on the basis of a result obtained by the measurement.

9. The ballast water treatment method according to claim 7, further comprising:
a step of inputting a command to make ballast water flow from the ballast tank (60) to the circulation pipe (80); and
a step of adjusting an amount of a sterilizing component to be introduced into the main pipe (2) in the circulation step on the basis of the input command.

10. The ballast water treatment method according to claim 7, further comprising
a step of adjusting an amount of a sterilizing component to be introduced into the main pipe (2) in the circulation step on the basis of a time period before a scheduled date and time when a vessel mounted with the ballast water treatment device (1) according to any one of claims 1 to 5 calls at a port.

11. The ballast water treatment method according to claim 7, wherein the concentration measurement unit (41) is provided in the circulation pipe (80),
the ballast water stored in the ballast tank (60) is kept flowing to the circulation pipe (80), and
the concentration measurement unit (41) measures a sterilizing component concentration of ballast water flowing through the circulation pipe (80) in a predetermined measurement cycle.

## Patentansprüche

1. Ballastwasseraufbereitungsvorrichtung (1), die aufweist:
einen Ballasttank (60);
eine Hauptleitung (2), die Ballastwasser zum Ballasttank (60) leitet;
eine Ballastpumpe (10), die in der Hauptleitung (2) angeordnet ist;
eine Umwälzleitung (80), die das im Ballasttank (60) gespeicherte Ballastwasser zur Hauptleitung (2) zurückführt;
eine Sterilisationskomponenten-Einleitungseinheit (40) zum Einleiten einer Sterilisationskomponente in eine Stromabwärtsseite eines Teils der Hauptleitung (2), wobei der Teil mit der Umwälzleitung (80) verbunden ist, wobei ein Ende der Umwälzleitung (80) mit dem Ballasttank (60) verbunden ist und das andere Ende der Umwälzleitung (80) mit einem ersten Verbindungsteil (2C) verbunden ist, der stromaufwärts von der Ballastpumpe (10) und der Sterilisationskomponenten-Einleitungseinheit (40) in der Hauptleitung (2) angeordnet ist;
eine Konzentrationsmesseinheit (41) zum Messen einer Konzentration der Sterilisationskomponente des im Ballasttank gespeicherten Ballastwassers,
ein Filter (20), das stromabwärts von der Ballastpumpe (10) in der Hauptleitung (2) angeordnet ist, wobei die Sterilisationskomponenten-Einleitungseinheit (40) stromabwärts vom Filter (20) in der Hauptleitung (2) angeordnet ist;
eine Umgehungsleitung (90), die das Filter (20) umgeht und ein erstes Ende und ein zweites Ende aufweist, wobei das erste Ende mit einem zweiten Verbindungsteil (2D) der Hauptleitung (2) verbunden ist, der stromaufwärts vom Filter (20) und stromabwärts von der Ballastpumpe (10) angeordnet ist, und wobei das zweite Ende mit einem dritten Verbindungsteil (2E) der Hauptleitung (2) verbunden ist, der stromabwärts vom Filter (20) und stromaufwärts von der Sterilisationskomponenten-Einleitungseinheit (40) angeordnet ist;
einen Mischer (50), der stromabwärts von der Sterilisationskomponenten-Einleitungseinheit (40) in der Hauptleitung (2) angeordnet ist;
ein erstes Schaltventil (71A), das in der Umwälzleitung (80) angeordnet ist, um eine Menge des Umwälzungsballastwassers einzustellen, das durch die Umwälzleitung (80) fließen soll;
ein zweites Schaltventil (71B), das stromaufwärts vom ersten Verbindungsteil (2C) angeordnet ist, um eine Meerwassermenge einzustellen, die in die Hauptleitung (2) aufgenommen werden soll;
ein drittes Schaltventil (71C), das stromabwärts vom zweiten Verbindungsteil (2D) und
stromaufwärts vom dritten Verbindungsteil (2E) angeordnet ist, um eine Einstellung vorzunehmen, um Meerwasser zum Filter (20) fließen zu lassen oder Ballastwasser zur Umgehungsleitung (90) fließen zu lassen; und
eine Steuereinheit (72B), die konfiguriert ist, das erste Schaltventil (71A) zu öffnen und
das zweite und dritte Schaltventil (71B, 71C) zu schließen und die Ballastpumpe (10) einzuschalten, so dass das Ballastwasser, das durch die Hauptleitung (2) fließt und vom Ballasttank (60) über die Umwälzleitung (80) zurückgeleitet wird, zum Ballasttank (60) über die Umgehungsleitung (90) zurückkehrt, wobei eine Menge einer Sterilisationskomponente im Ballastwasser im Ballasttank (60) durch Einleiten der Sterilisationskomponente aus der Sterilisationskomponenten-Einleitungseinheit (40) in die Hauptleitung (2) eingestellt wird, wenn das Ballastwasser im Ballasttank (60) durch die Hauptleitung (2) über die Umwälzleitung (80) fließt und zum Ballasttank (60) über die Umgehungsleitung (90) zurückgeleitet wird.

2. Ballastwasseraufbereitungsvorrichtung nach Anspruch 1, die ferner eine Sterilisationskomponenten-Einstelleinheit (70) aufweist, die eine Menge einer Sterilisationskomponente einstellt, die von der Sterilisationskomponenten-Einleitungseinheit (40) in die Hauptleitung (2) eingeleitet werden soll, wobei die Sterilisationskomponenten-Einstelleinheit (70) das dritte Schaltventil (71C) und die Steuereinheit (72B) enthält.

3. Ballastwasseraufbereitungsvorrichtung nach Anspruch 2, wobei die Sterilisationskomponenten-Einstelleinheit (70) eine Menge einer Sterilisationskomponente, die von der Sterilisationskomponenten-Einleitungseinheit (40) in die Hauptleitung (2) eingeleitet werden soll, auf der Grundlage eines Messergebnisses einstellt, das durch die Konzentrationsmesseinheit (41) erhalten wird.

4. Ballastwasseraufbereitungsvorrichtung nach Anspruch 2, die ferner aufweist eine Eingabeeinheit (72'), die einen Befehl empfängt, Ballastwasser vom Ballasttank (60) zur Umwälzleitung (80) fließen zu lassen,
wobei die Sterilisationskomponenten-Einstelleinheit (70) eine Menge einer Sterilisationskomponente, die von der Sterilisationskomponenten-Einleitungseinheit (40) in die Hauptleitung (2) eingeleitet werden soll, auf der Grundlage des durch die Eingabeeinheit (72') empfangenen Befehls einstellt.

5. Ballastwasseraufbereitungsvorrichtung nach Anspruch 2 oder 3, wobei eine Menge einer Sterilisationskomponente, die von der Sterilisationskomponenten-Einleitungseinheit (40) in die Hauptleitung (2) eingeleitet werden soll, auf der Grundlage einer Zeitspanne vor einem geplanten Datum und einer geplanten Uhrzeit eingestellt wird, an dem ein Schiff, das mit der Ballastwasseraufbereitungsvorrichtung nach Anspruch 2 oder 3 ausgestattet ist, einen Hafen anläuft.

6. Ballastwasseraufbereitungsvorrichtung nach Anspruch 1, wobei ein Chemiebehälter (40'), der ein Sterilisationsmittel (3) enthält, als die Sterilisationskomponenten-Einleitungseinheit (40) vorgesehen ist,
wobei der Chemiebehälter (40') einen Behälterhauptkörper (40A) und ein gitterförmiges Element (40B) aufweist, das im Behälterhauptkörper (40A) untergebracht und mit mehreren Sterilisationsmitteln (3) gefüllt ist, und
der Behälterhauptkörper (40A) einen Schlitz aufweist, der an einer Seitenfläche des Behälterhauptkörpers (40A) vorgesehen ist, wobei das Ballastwasser durch den Schlitz ins Innere des Behälterhauptkörpers (40A) fließt.

7. Ballastwasseraufbereitungsverfahren, das die Ballastwasseraufbereitungsvorrichtung (1) nach einem der Ansprüche 1 bis 6 verwendet, wobei das Verfahren einen Umwälzschritt zum Zurückleiten des im Ballasttank (60) gespeicherten Ballastwasser zur Hauptleitung (2) über eine Umwälzleitung (80) und zum Zurückleiten des Ballastwassers aus der Hauptleitung (2) zum Ballasttank (60) aufweist,
wobei im Umwälzschritt durch Einleiten einer Sterilisationskomponente in eine Stromabwärtsseite des Teils der Hauptleitung (2), der mit der Umwälzleitung (80) verbunden ist, das Ballastwasser, das die Sterilisationskomponente enthält, zum Ballasttank (60) zurückgeleitet wird.

8. Ballastwasseraufbereitungsverfahren nach Anspruch 7, das ferner aufweist:
einen Schritt zum Messen einer Konzentration der Sterilisationskomponente des im Ballasttank (60) gespeicherten Ballastwassers; und
einen Schritt zum Einstellen einer Menge einer Sterilisationskomponente, die im Umwälzschritt in die Hauptleitung (2) eingeleitet werden soll, auf der Grundlage eines durch die Messung erhaltenen Ergebnisses.

9. Ballastwasseraufbereitungsverfahren nach Anspruch 7, das ferner aufweist:
einen Schritt zum Eingeben eines Befehls, um das Ballastwasser aus dem Ballasttank (60) zur Umwälzleitung (80) fließen zu lassen; und
einen Schritt zum Einstellen einer Menge einer Sterilisationskomponente, die im Umwälzschritt in die Hauptleitung (2) eingeleitet werden soll, auf der Grundlage des Eingabebefehls.

10. Ballastwasseraufbereitungsverfahren nach Anspruch 7, das ferner aufweist:
einen Schritt zum Einstellen einer Menge einer Sterilisationskomponente, die in die Hauptleitung (2) im Umwälzschritt eingeleitet werden soll, auf der Grundlage einer Zeitspanne vor einem geplanten Datum und einer geplanten Uhrzeit, an dem ein Schiff, das mit der Ballastwasseraufbereitungsvorrichtung (1) nach einem der Ansprüche 1 bis 5 ausgestattet ist, einen Hafen anläuft.

11. Ballastwasseraufbereitungsverfahren nach Anspruch 7, wobei die Konzentrationsmesseinheit (41) in der Umwälzleitung (80) vorgesehen ist,
der Fluss des im Ballasttank (60) gespeicherten Ballastwassers zur Umwälzleitung (80) aufrechterhalten wird, und
die Konzentrationsmesseinheit (41) eine Konzentration der Sterilisationskomponente des durch die Umwälzleitung (80) fließenden Ballastwassers in einem vorgegebenen Messzyklus misst.

## Revendications

1. Dispositif de traitement d'eau de ballastage (1) comprenant :
un réservoir de ballastage (60) ;
un tuyau principal (2) qui guide l'eau de ballastage vers le réservoir de ballastage (60) ;
une pompe de ballastage (10) agencée dans le tuyau principal (2) ;
un tuyau de circulation (80) qui renvoie l'eau de ballastage stockée dans le réservoir de ballastage (60) vers le tuyau principal (2) ;
une unité d'introduction de composant de stérilisation (40) pour introduire un composant de stérilisation d'un côté aval d'une partie du tuyau principal (2), la partie étant raccordée au tuyau de circulation (80), une extrémité du tuyau de circulation (80) étant raccordée au réservoir de ballastage (60) et l'autre extrémité du tuyau de circulation (80) étant raccordée à une première partie de raccordement (2C) située en amont de la pompe de ballastage (10) et de l'unité d'introduction de composant de stérilisation (40) dans le tuyau principal (2) ;
une unité de mesure de concentration (41) pour mesurer une concentration en composant de stérilisation de l'eau de ballastage stockée dans le réservoir de ballastage, un filtre (20) agencé en aval de la pompe de ballastage (10) dans le tuyau principal (2), l'unité d'introduction de composant de stérilisation (40) étant agencée en aval du filtre (20) dans le tuyau principal (2) ;
un tuyau de détour (90) contournant le filtre (20) et incluant une première extrémité et une seconde extrémité, la première extrémité étant raccordée à une deuxième partie de raccordement (2D) du tuyau principal (2) située en amont du filtre (20) et en aval de la pompe de ballastage (10), et la seconde extrémité étant raccordée à une troisième partie de raccordement (2E) du tuyau principal (2) située en aval du filtre (20) et en amont de l'unité d'introduction de composant de stérilisation (40) ;
un mélangeur (50) agencé en aval de l'unité d'introduction de composant de stérilisation (40) dans le tuyau principal (2) ;
une première vanne de commutation (71A) agencée dans le tuyau de circulation (80) pour ajuster une quantité d'eau de ballastage en circulation pour un écoulement à travers le tuyau de circulation (80) ;
une deuxième vanne de commutation (71B) agencée en amont de la première partie de raccordement (2C) pour ajuster une quantité d'eau de mer à prendre dans le tuyau principal (2) ;
une troisième vanne de commutation (71C) agencée en aval de la deuxième partie de raccordement (2D) et en amont de la troisième partie de raccordement (2E) pour effectuer un ajustement pour permettre à l'eau de mer de s'écouler vers le filtre (20) ou l'eau de ballastage de s'écouler vers le tuyau de détour (90) ; et
une unité de commande (72B) configurée pour ouvrir la première vanne de commutation (71A) et fermer les deuxième et troisième vannes de commutation (71B, 71C) et activer la pompe de ballastage (10) pour que l'eau de ballastage s'écoulant à travers le tuyau principal (2) et renvoyée à partir du réservoir de ballastage (60) via le tuyau de circulation (80) retourne dans le réservoir de ballastage (60) via le tuyau de détour (90), dans lequel une quantité d'un composant de stérilisation dans l'eau de ballastage dans le réservoir de ballastage (60) est ajustée en introduisant le composant de stérilisation à partir de l'unité d'introduction de composant de stérilisation (40) dans le tuyau principal (2) quand l'eau de ballastage dans le réservoir de ballastage (60) s'écoule à travers le tuyau principal (2) via le tuyau de circulation (80) et est renvoyée vers le réservoir de ballastage (60) via le tuyau de détour (90).

2. Dispositif de traitement d'eau de ballastage selon la revendication 1, comprenant en outre une unité d'ajustement de composant de stérilisation (70) qui ajuste une quantité d'un composant de stérilisation à introduire à partir de l'unité d'introduction de composant de stérilisation (40) dans le tuyau principal (2), l'unité d'ajustement de composant de stérilisation (70) incluant la troisième vanne de commutation (71C) et l'unité de commande (72B).

3. Dispositif de traitement d'eau de ballastage selon la revendication 2, dans lequel l'unité d'ajustement de composant de stérilisation (70) ajuste une quantité d'un composant de stérilisation à introduire à partir de l'unité d'introduction de composant de stérilisation (40) dans le tuyau principal (2) sur la base d'un résultat de mesure obtenu par l'unité de mesure de concentration (41).

4. Dispositif de traitement d'eau de ballastage selon la revendication 2, comprenant en outre
une unité d'entrée (72') qui reçoit une commande pour faire s'écouler l'eau de ballastage depuis le réservoir de ballastage (60) vers le tuyau de circulation (80), dans lequel l'unité d'ajustement de composant de stérilisation (70) ajuste une quantité d'un composant de stérilisation à introduire à partir de l'unité d'introduction de composant de stérilisation (40) dans le tuyau principal (2) sur la base de la commande reçue par l'unité d'entrée (72').

5. Dispositif de traitement d'eau de ballastage selon la revendication 2 ou 3, dans lequel une quantité d'un composant de stérilisation à introduire à partir de l'unité d'introduction de composant de stérilisation (40) dans le tuyau principal (2) est ajustée sur la base d'une période de temps avant une date et une heure programmées quand un navire équipé du dispositif de traitement d'eau de ballastage selon la revendication 2 ou 3 fait escale dans un port.

6. Dispositif de traitement d'eau de ballastage selon la revendication 1, dans lequel un récipient de produit chimique (40') incluant un agent de stérilisation (3) est fourni en tant qu'unité d'introduction de composant de stérilisation (40),
le récipient de produit chimique (40') inclut un corps principal de récipient (40A) et un élément de type maille (40B) logé dans le corps principal de récipient (40A) et rempli avec une pluralité d'agents de stérilisation (3), et
le corps principal de récipient (40A) présente une fente fournie sur une surface latérale du corps principal de récipient (40A), l'eau de ballastage s'écoulant à l'intérieur du corps principal de récipient (40A) à travers la fente.

7. Procédé de traitement d'eau de ballastage utilisant le dispositif de traitement d'eau de ballastage (1) selon l'une quelconque des revendications 1 à 6, le procédé comprenant une étape de circulation consistant à renvoyer l'eau de ballastage stockée dans le réservoir de ballastage (60) vers le tuyau principal (2) via un tuyau de circulation (80) et à renvoyer l'eau de ballastage à partir du tuyau principal (2) dans le réservoir de ballastage (60),
dans lequel, dans l'étape de circulation, en introduisant un composant de stérilisation d'un côté aval de la partie du tuyau principal (2) raccordée au tuyau de circulation (80), l'eau de ballastage incluant le composant de stérilisation est renvoyée vers le réservoir de ballastage (60).

8. Procédé de traitement d'eau de ballastage selon la revendication 7, comprenant en outre :
une étape de mesure d'une concentration en composant de stérilisation de l'eau de ballastage stockée dans le réservoir de ballastage (60) ; et
une étape d'ajustement d'une quantité d'un composant de stérilisation à introduire dans le tuyau principal (2) dans l'étape de circulation sur la base d'un résultat obtenu par la mesure.

9. Procédé de traitement d'eau de ballastage selon la revendication 7, comprenant en outre :
une étape d'entrée d'une commande pour faire s'écouler l'eau de ballastage depuis le réservoir de ballastage (60) vers le tuyau de circulation (80) ; et
une étape d'ajustement d'une quantité d'un composant de stérilisation à introduire dans le tuyau principal (2) dans l'étape de circulation sur la base de la commande d'entrée.

10. Procédé de traitement d'eau de ballastage selon la revendication 7, comprenant en outre
une étape d'ajustement d'une quantité d'un composant de stérilisation à introduire dans le tuyau principal (2) dans l'étape de circulation sur la base d'une période de temps avant une date et une heure programmées quand un navire équipé du dispositif de traitement d'eau de ballastage (1) selon l'une quelconque des revendications 1 à 5 fait escale dans un port.

11. Procédé de traitement d'eau de ballastage selon la revendication 7, dans lequel l'unité de mesure de concentration (41) est fournie dans le tuyau de circulation (80), l'eau de ballastage stockée dans le réservoir de ballastage (60) continue de s'écouler vers le tuyau de circulation (80), et
l'unité de mesure de concentration (41) mesure une concentration en composant de stérilisation de l'eau de ballastage s'écoulant à travers le tuyau de circulation (80) dans un cycle de mesure prédéterminé.
